# EUROPEAN PATENT APPLICATION

(11) **EP 4 657 133 A1**
(43) Date of publication of application: **03.12.2025**
(21) Application number: 24178835.5
(22) Date of filing: 29.05.2024
(51) Int. Cl.: G02B 21/00

(54) **AN OPTICAL SYSTEM FOR A MICROSCOPE AND A METHOD FOR OPERATING THE MICROSCOPE**

(71) Applicant: Leica Microsystems CMS GmbH, 35578 Wetzlar (DE)
(72) Inventor: Schumann, Christian, 35578 Wetzlar (DE)
(74) Representative: Schaumburg und Partner Patentanwälte mbB

(57) **Abstract**

In a first aspect, an optical system (100) for a microscope is provided. The optical system (100) comprises an excitation light source (102) configured to generate pulses of excitation light (300) and an objective lens (104) configured to direct the excitation light into a sample space (106) and to receive detection light (304) from the sample space (106). The optical system further comprises a detection unit (110) comprising a detector array configured to receive the detection light (304). A scanning unit (114) is arranged between the excitation light source (102) and the objective lens (104) and is configured to selectively direct the excitation light into different regions of the sample space (106) via the objective lens (104). The optical system further comprises a beam splitter (112) configured to direct the excitation light from the excitation light source (102) to the objective lens (104), in particular via the scanning unit (114), and to direct detection light from the objective lens (104) to the detection unit (110). The detector array is time-gated with respect to the pulses of the excitation light (300). In further aspect, a microscope and a method for operating the microscope are provided.

## Description

### Technical field

The invention relates to an optical system for a microscope and corresponding microscope. In a further aspect, a method for operating the microscope is provided.

### Background

Fluorescent microscopes, such as known from US 11422348, typically share beam paths for excitation light and respective detection light. Beam splitters are provided to combine and separate the excitation light and detection light between a sample space and an excitation light source and a detector. Further, spectral filters can reduce the amount of (stray) excitation light spilling over onto the detector. Nevertheless, these solutions are technically complex and undesired excitation light leakage onto the detector may occur due to insufficient filtering of the light path between the excitation source and the detector. Since the intensity of excitation light is usually several magnitudes higher than the intensity of corresponding detection light, even minor leaks can introduce significant amount of unwanted light into a detection unit.

The stray excitation light can overwhelm the faint fluorescence emitted by a sample, thereby reducing the signal-to-noise ratio. This makes it difficult to detect weakly fluorescent species and can obscure fine details necessary for accurate interpretation and analysis. This not only affects the quality of the image data but can also lead to misinterpretation of experimental results, particularly in sensitive applications such as fluorescence microscopy in medical diagnostics or cellular biology research.

### Summary

It is an object to provide an optical system that enables efficiently generating high-resolution detection data, in particular for intensity images, of fluorescent samples.

The aforementioned object is achieved by the subject-matter of the independent claims. Advantageous embodiments are defined in the dependent claims and the following description.

In a first aspect, an optical system for a microscope is provided. The optical system comprises an excitation light source configured to generate pulses of excitation light and an objective lens configured to direct the excitation light to or into a sample space and to receive detection light from the sample space, in particular to receive detection light from the sample space. The optical system further comprises a detection unit comprising a detector array configured to receive the detection light. A scanning unit is arranged between the excitation light source and the objective lens and is configured to selectively direct the excitation light into different regions of the sample space via the objective lens. Equally, the scanning unit may be configured to receive detection light from the different regions and direct the (descanned) detection light to the detector array. Thus, the optical system may be for a (image) scanning microscope, in particular. The optical system further comprises a beam splitter configured to direct the excitation light from the excitation light source to the objective lens, in particular via the scanning unit, and to direct detection light from the objective lens, in particular from the scanning unit, to the detection unit. The detector array is time-gated with respect to the pulses of the excitation light.

The time-gated detector array enables reducing or entirely avoiding crosstalk of the excitation light and the detection light. In other words, the optical system enables reducing or entirely avoiding the generation of a detection signal from the pulsed excitation light that is leaked or reflected onto the detector array. In particular, by means of the time-gated detector a signal in response to the detection light may only be generated and/or recorded before or after the pulses of excitation light. This enables increasing a signal-to-noise ratio of the generated detection signal. In particular, the optical system may comprise a gating unit configured to time-gate the detector array with respect to the pulses of the excitation light.

In particular, the detector array may be gated for at least the duration of the excitation light pulses. Thus, the detection light is preferably only detected and/or recorded when the excitation light is off or not illuminating the sample space. Equally, light is preferably not detected and/or recorded during an excitation light pulse.

The pulse shape of the excitation light pulses is considered for such gating purposes. Usually, the excitation light pulses can be modelled. For example, the intensity of the excitation light pulse over time can be modeled by a Gaussian function. Thus, the duration of the excitation light pulses or the pulse width may be described by a respective full width half maximum value. In particular, the time-gate may preferably be switched off, when the intensity is below a preset threshold, for example, with respect to the full width half maximum value.

Since the excitation light pulses are repetitive and the excitation light pulses may act as or synchronise a system clock, delays in signal generation of detector elements can be accounted for by shifting gate-triggers, in particular by adjusting the phase between the two repetitive excitation light clock and time-gate clock. Any potential delay between detector signal generation and detector element switching may be considered as jitter, and dealt with by expanding the off-time of the gate by a proportional adjustment amount, for example.

For example, the excitation light source may comprise a laser light source, in particular a white light laser. Further, the pulses of excitation light may be generated at a frequency in a preferred range between 10 and 100 MHz, more preferably at a frequency of 80Mhz. The excitation light, in particular the generated pulses of excitation light, may be successively directed to each of the different regions of the sample space by means of the scanning unit, in what is frequently referred to as scanning. The excitation light may selectively excite fluorophores within each of the regions of the sample space. In response, the excited fluorophores may emit the detection light. Fluorescence lifetimes of the excited fluorophores are usually in the range of 2 to 6 ns. With a pulse rate of e.g. 80 MHz / 12.5 ns it is usually possible to capture most of, if not all of the emitted photons before the next excitation pulse arrives.

In particular, the detector array may be a two-dimensional detector array. The detector array may preferably comprise individual detector elements, such as photodiodes, that are arranged as the two-dimensional array. In particular, each of the individual detector elements is configured to generate a (electrical) signal in response to incident detection light. In a specific example, the detector elements may be single-photon avalanche diodes. The generated signal of each of the individual detector elements may be read out or processed individually by a control unit.

Preferably, the optical system comprises a control unit configured to receive a detection signal from the detector array. Providing a control unit with the optical system enables efficiently receiving and processing of the detection signal from the detector array. In particular, the control unit may be an integral part of the optical system, rather than an external component. This further enables providing a compact construction. For example, the control unit may comprise an integrated circuit such as a field programmable gate array. The control unit may further be configured to control further units or functions of the optical system, such as the scanning unit.

Preferably, the control unit is configured to integrate the detection signal received from the detector array. This enables efficient processing of the detection signal. For example, the detection signal may be integrated over the dwell time of a pixel or over a pre-defined time interval for each pixel. The pre-defined time interval may vary, for example, during a line scan, if a scan speed is not linear. In particular, transferring detection signal data comprising time-resolved data to a processing system external to the optical system, such as a computer, is often limited by the bandwidth of the connection to the external processing system. This may reduce a maximum image acquisition rate. In particular in case time-resolved data is not required, time-tagged photon count data for each pixel may be integrated by means of the control unit and thereby reduce the amount of data transmitted to the external processing system and the efficiency of data processing.

In a particularly preferred embodiment, the control unit comprises a system clock. This enables accurate timing of the time-gated detector array. Further, the system clock may provide a timing signal for the pulses of the excitation light and the time-gated detector array. Thus, the system clock may be configured to synchronise the excitation light pulses and the time-gated array detector.

Alternatively or in addition, the excitation light pulses may act as a system clock and trigger the time-gate or the system clock is synchronised to the excitation light pulses. In particular in the latter case, an optical detector configured to detect (at least a portion of) the emitted light pulses may be provided and the detected signals of the optical detector are used as the system clock.

Preferably, the control unit comprises a gating unit configured to time-gate the detector signal with respect to the pulses of the excitation light. The gating unit may, in particular, be a gating logic or an integrated circuit, such as a field programmable gate array. The gating unit of the control unit enables separating a detection signal received from the detector array with respect to the pulses of the excitation light. In particular, the gating unit may only provide a detection signal for processing by the control unit before or after pulses of the excitation light. By providing the control unit comprising the gating unit, the detector array may be time-gated with respect to the pulses of the excitation light without modifying the detector array itself.

Preferably, the detection unit comprises a gating unit configured to time-gate the detector array with respect to the pulses of the excitation light. This enables gating of a detection signal close to the source of the detection signal in the detection unit.

In a particularly preferred embodiment, each detector element, such as a photodiode, of the detector array of the detection unit comprises a gating unit configured to time-gate the respective detector element with respect to the pulses of the excitation light. The gating unit may, for example, be a gating logic or an integrated circuit, such as a field programmable gate array. In particular, the gating units may close and switch off the respective detector elements, and/or discard a generated detection signal at the respective detector elements.

Providing the gating units such that they switch off the respective detector elements is particularly preferred. In this case, the incident excitation or detection light does not cause the detector elements to generate a corresponding detection signal. Neither do incident photons of the excitation or detection light trigger a dead-time of the detector elements. Thus, when the detector elements are switched off by their respective gating units, the detector elements cannot generate a detection signal. This particular embodiment may be implemented by providing the detector array with detector elements that each have a dedicated gate transistor for the bias voltage, for example. Such dedicated gate transistors can also be used in active quenching circuits for Geiger-mode operation, for example.

Preferably, the excitation light source is configured to generate the pulses of excitation light with a pulse width of each pulse in a range between 5 to 100 ps, preferably in a range between 10 to 50ps, more preferably in a range between 10 to 20ps. In particular, the detector array is gated for at least that time.

Preferably, the optical system comprises a pinhole. This enables discarding out-of-focus detection light and increasing the spatial resolution of the optical system and image quality. For example, the pinhole may be arranged in a beam path of the detection light before the detection unit, in particular, in a conjugated image plane. Alternatively, the pinhole may be arranged between the beam splitter and the scanning unit.

Preferably, the detection unit comprises at least one detection beam splitter configured to direct a first part of the detection light onto the detector array and a second part of the detection light onto a further detector array. The detection unit may comprise dispersive elements in order to spectrally separate the detection light, or the first part of the detection light and the second part of the detection light. This enables improved resolution imaging and improved signal-to-noise ratio. It further enables reconstructing a spectral information about the detection light without the significant loss of detection light The first detector array and the further detector array may be different regions of the same detector array or may be separate detector arrays.

In a further aspect, a microscope, in particular a scanning microscope or image scanning microscope, comprising the optical system as described is provided. For example, the microscope may comprise a stage, on which the sample space may be arranged. In particular, the microscope is configured to generate and/or integrate a time-gated detection signal of the detector array over a pixel dwell time. The pixel dwell time may be the duration the excitation light pulses are directed to a particular one of the sample regions.

The microscope may be part of a microscope system, which further comprises a processing system, such as a computer that is external or separate to the microscope, for processing of the detection signal data generated by the detector array of the optical system. In particular, the microscope system may comprise the control unit configured to transfer detection signal data, in particular integrated detection signal data to the processing system. The processing system may be configured to generate image data from the per-pixel integrated detection signal data that is generated by means of the optical system of the microscope when descanning a sample. This enables fast and efficient processing of detection signal data and generation of image data. In particular, this is due to a reduced bandwidth requirement between the microscope and the processing system compared to when transferring time-tagged photon arrival data as the detection signal data.

In another aspect, a method for operating the microscope comprising the optical system is provided. The method comprises the steps of generating pulses of excitation light; scanning a sample with the pulses of excitation light; descanning detection light onto a detector array; gating the detector array at least for a duration of the pulses of excitation light.

Preferably, a time-gated detection signal of the detector array is integrated over a pixel dwell time. The pixel dwell time may be the duration the excitation light pulses are directed to a particular one of the sample regions. This enables efficiently generating high-resolution imaging data.

The microscope and the method have the same advantages as the optical system. Further, the microscope and the method may be supplemented with the features of the optical system described in this document, in particular, the features of the dependent claims of the optical system.

### Short Description of the Figures

Hereinafter, specific embodiments are described referring to the drawings, wherein:
- Figure 1: is a schematic view of an optical system,
- Figure 2: is a flow chart of a method for operating the optical system,
- Figure 3: is a schematic diagram showing a first timing of a time-gate of the optical system, and
- Figure 4: is a schematic diagram showing a second timing of the time-gate of the optical system.

### Detailed Description

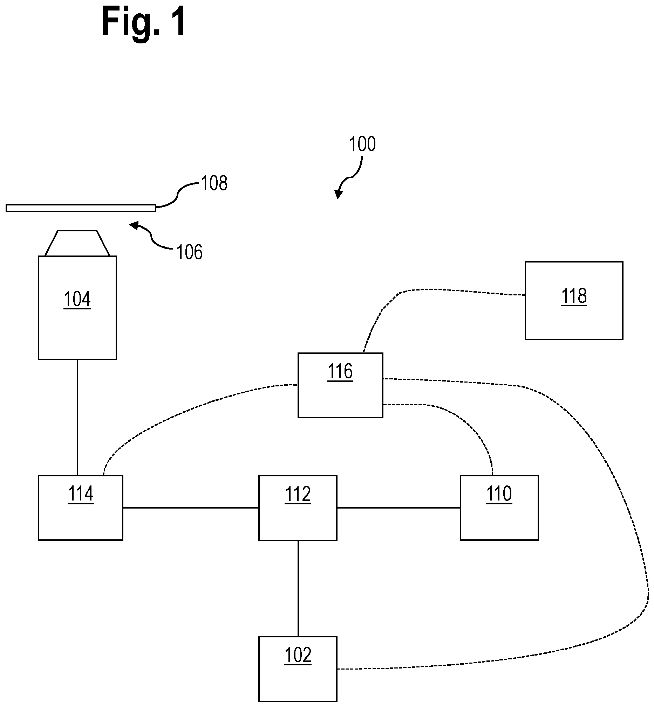

Figure 1 is a schematic view of an optical system 100 for a microscope, such as a scanning microscope, an image scanning microscope, or a confocal microscope. The optical system 100 comprises an excitation light source 102, such as a laser configured to emit pulsed laser light, which is configured to generate pulses of excitation light. In particular, the excitation light source 102 generates focussed beams of excitation light pulses.

In Fig. 1 full lines between the elements of the optical system 100 schematically represent beam paths of excitation light and/or detection light. Electric connections are represented by dashed lines.

The optical system 100 further comprises an objective lens 104 configured to direct the excitation light generated by the light source 102 into a sample space 106. In the sample space 106 a sample to be investigated by means of the optical system 100 may be arranged on a sample carrier 108. The sample may be a biological sample, for example. In particular, the sample may have been previously stained with one or more fluorophores. The excitation light directed into the sample space 106 may be configured to excite the fluorophores in the sample.

The objective lens 104 is further configured to receive detection light from the sample space 106. In particular, the detection light may be fluorescent light generated when the fluorophores in the sample are excited by the excitation light. Similarly, excitation light reflected in the sample space 106, for example by a cover glass, may regularly be received by the objective lens 104, as well.

Further, the optical system 100 comprises a detection unit 110 with a detector array configured to receive the detection light. In particular, the detector array is a two-dimensional array of individual detector elements, such as photodiodes. Thus, the detection unit 110 enables detection of detection light, in particular fluorescent light, generated in the sample space 106.

The optical system 100 comprises a beam splitter 112 in order to direct excitation light from the excitation light source 102 to the objective lens 104, in particular to the sample space 106, and to direct detection light from the objective lens 104, in particular from the sample space 106, to the detection unit 110. The beam splitter 112 may be a dichroic optical element or an acousto-optical element, for example.

The optical system 100 further comprises a scanning unit 114 configured to selectively direct excitation light into different regions or volumes of the sample space 106. Thus, the scanning unit 114 enables scanning of the sample in the sample space 106 with the excitation light, e.g. according to a meander scanning pattern. In particular, the scanning unit 114 is arranged along a beam path of the excitation light and/or detection light between the objective lens 104 and the excitation light source 102, preferably, between the objective lens 104 and the beam splitter 112. As an example, the scanning unit may comprise one or more tiltable mirrors, such as a galvanometric mirror scanner. Similarly to the excitation light, the scanning unit 114 may descan detection light generated from the particular region of the sample space 106 that the excitation light is selectively directed to.

In a particular embodiment, the optical system 100 may further comprise a pinhole. The pinhole is preferably arranged in a beam path of the detection light, for example, between the beam splitter 112 and the detection unit 110. In addition, a further pinhole may preferably be arranged in a beam path of the excitation light, for example, between the beam splitter 112 and the excitation light source 102. Alternatively, the excitation light source 102 may comprise the further pinhole. Thus, both the excitation light and the detection light may share the same focal point in the sample space 106, as this might be the case in a confocal arrangement of the pinholes.

The optical system 100 may further comprise a control unit 116 configured to control functions and elements of the optical system. In particular, the control unit 116 may control the scanning unit 114 to selectively direct the excitation light to different regions of the sample space 106. Moreover, the control unit 116 may be configured to direct the excitation light source 102 to generate the pulses of excitation light at a particular frequency.

In a particular embodiment, the control unit 116 may comprise a system clock, in particular, configured to provide a timing signal for the optical system 100. The timing signal may be used to synchronise different elements and functions of the optical system 100 with each other. For example, the excitation light source 102 may receive the timing signal in order to regulate the frequency and/or duration of the pulses of the excitation light. Alternatively, the excitation light source 102 may generate the timing signal and the time-gated functionality may be based on that timing signal.

The timing signal may further be received by the scanning unit 114, in particular, in order to regulate the scanning of the sample in the sample space 106 with the excitation light. For example, the timing signal may regulate or determine the time the excitation light is directed by the scanning unit 114 to a particular one or to each of the different regions of the sample space 106. This may be referred to as the pixel dwell time. The pixel dwell time is regularly at 1µs.

The control unit 116 may further be configured to receive a detection signal from the detector array. For example, the detection signal may comprise time-tagged photon arrival data from each of the detector elements of the detector array.

The detector array of the optical system 100 is time-gated with respect to the pulses of the excitation light. In particular, the optical system 100 may comprise a gating unit configured to time-gate the detector array with respect to the pulses of the excitation light. The timing signal of the control unit 116 may further be used for time-gating the detector array with respect to the pulses of the excitation light, for example. The gating unit may be an integrated circuit such as a field programmable gate array, for example.

In a particular embodiment, the control unit 116 comprises the gating unit. In this case, the detection signal received by the control unit 116 from the detector array may be time-gated with respect to the excitation light pulses. For example, the control unit 116 may comprise the gating unit, which is operated such that the control unit 116 only receives the detection signal from the detector array when the pulses of the excitation light are not illuminating the sample space 106. When the sample space 106 is illuminated by the pulses of excitation light, the gating unit may be operated such that the control unit 116 may not receive the detection signal.

Alternatively or in addition, the detector array of the detection unit 110 may be directly time-gated by the gating unit, either such that the detection signal is intermittently not received by the control unit 116 or such that the detection signal is intermittently not generated by the detector array in the first place.

Preferably, in the case the gating unit prevents the detection signal from being generated, the detection unit 110, in particular the detector array, may comprise the gating unit. In this case, each of the detector elements of the detector array may comprise one of the gating units. For example, the gating unit of each detector element may be a gating transistor for the bias voltage of the respective detector element. When the gating units are closed the detector elements do not generate a detection signal. The closing and opening of the gating units may be triggered with respect to the pulses of the excitation light, such that the gating units are closed and the detector elements do not generate a signal from incident light when the sample space 106 is illuminated by an excitation light pulse. This prevents incident light, in particular stray excitation light reflected from the sample space 106, from generating a corresponding detection signal and from triggering a dead-time of the detector elements. In particular, the gating units may be closed in response to a timing signal of the system clock, which may also trigger an excitation light pulse.

In addition, a processing system 118 may be provided that is external to the optical system 100. The processing system 118 may be configured to receive detection signal data generated by the control unit 116 of the optical system 100. The control unit 116 may be configured to generate the detection signal data by integrating the detection signal received from the detector array of the detection unit 110. The processing system 118 may then generate image data from the detection signal data in order to provide an image of the sample in the sample space 106 to a user. By integrating the detection signal by means of the control unit 116 prior to transfer to the external processing system 118, the amount of data to be transferred may be reduced and the bandwidth requirements for the transfer of the detection signal data. This enables fast and efficient processing of detection signal data and generation of image data.

The optical system 100 may be part of a fluorescence microscope, for example. In this case, the processing system 118 may be external to the microscope comprising the optical system 100.

In a further embodiment, the optical system 100, in particular its detection unit 110 may optionally comprise at least one further beam splitter configured to direct a first part of the detection light onto the detector array and a second part of the detection light onto a further detector array. The detection light or the first part of the detection light and the second part of the detection light may be dispersed by means of dispersive elements of the detection unit 110.

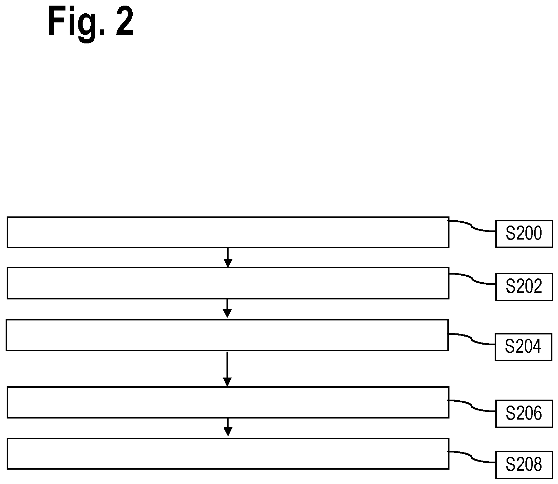

Figure 2 is a flow chart of a method for operating the optical system 100. The method starts with steps S200.

In a following step S202 an excitation light pulse is generated by means of the excitation light source 102 and a particular region of the sample space 106, in particular a region of a sample in the sample space 106, is illuminated with the excitation light pulses. For example, the excitation light source may be triggered to generate the excitation light pulse by a timing signal generated by the control unit 116. At least for the duration of the excitation light pulse, the detector array of the detection unit is gated during step S202. For example, the timing signal generated by the control unit 116 may close a gating unit in order to gate the detector array for a predetermined time, in particular for the duration of the excitation light pulse.

In a step S204, after the duration of the excitation light pulse, the gating unit is opened again, and the detection light generated in the particular region of the sample space 106 is descanned onto the detector array of the detection unit 110. The detector array generates a respective detection signal.

The steps S202 and S204 may be repeated to illuminate the particular (one-dimensional, two-dimensional, or three-dimensional) region of the sample space 106 with further excitation light pulses and generate respective detection signals.

In a step S206, the scanning unit 114 is adjusted to direct further excitation light pulses to a further region of the sample space 106.

The steps S202, S204, and S206 may be iteratively repeated in order to consecutively scan regions of the sample in the sample space 106.

The method ends in step S208.

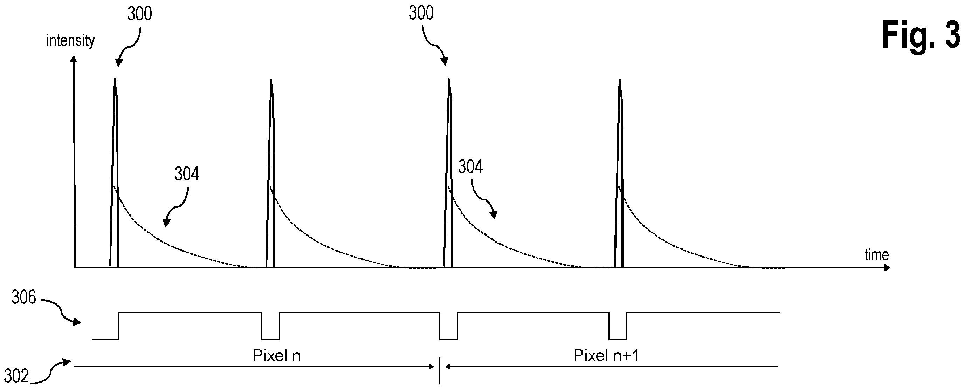

Figure 3 is a schematic diagram showing a first timing of a time-gate of the optical system 100. The diagram shows four excitation light pulses 300 over time. A pixel clock 302 indicates the scanning of several pixels or regions of the sample space 106 with the excitation light pulses 300. Excitation light pulses 300 generate corresponding detection light 304, in particular fluorescence emission of a sample in the sample space 106.

A gate state 306 indicates whether or not detector array is gated. In the embodiment according to Fig. 3, the detector array is gated or the gate state is closed (e.g. having a low value) for the duration of the excitation light pulse 300. Thus, for the duration of the excitation light pulse 300 the detector array does not generate a detection signal, or the detection signal is not received by the control unit 116. The detection light 304 received by the detector array when the gate state 306 is open (e.g. having a high value) generates a detector signal that may be integrated for the particular pixel.

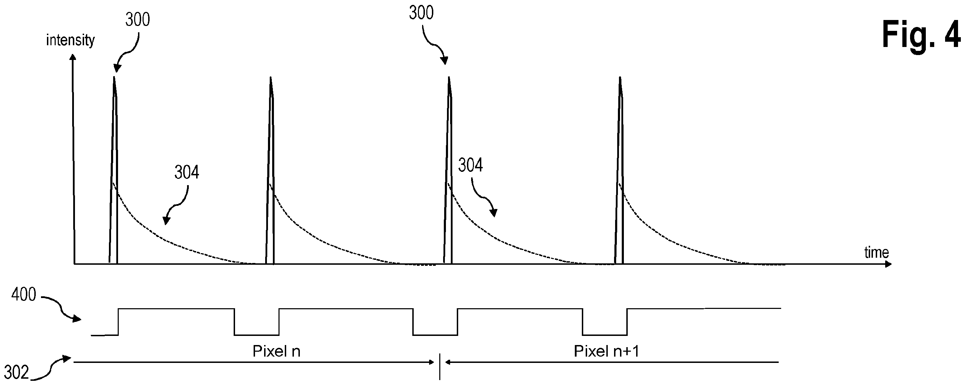

Figure 4 is a schematic diagram showing a second timing of the time-gate of the optical system 100. In this case a gate state 400 is controlled such that the detector array is gated prior to a particular excitation light pulse 300 until the end of the particular excitation light pulse 300. This timing is preferred in case the minimum off-time of a gating unit is longer than the duration of the excitation light pulse 300, in particular in case the gating unit switches the detector elements into an off-state. Since the probability of detection light 304 or fluorescence emission is highest shortly after the excitation light pulse 300, this timing maximises the average detection probability of detection light 304.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Optical system
- 102: Excitation light source
- 104: Objective lens
- 106: Sample space
- 108: Sample carrier
- 110: Detection unit
- 112: Beam splitter
- 114: Scanning unit
- 116: Control unit
- 118: Processing system
- 300: Excitation light pulse
- 302: Pixel clock
- 304: Detection light
- 306, 400: Gate state

## Claims

1. An optical system (100) for a microscope comprising
an excitation light source (102) configured to generate pulses of excitation light (300),
an objective lens (104) configured to direct the excitation light into a sample space (106) and to receive detection light (304) from the sample space (106),
a detection unit (110) comprising a detector array configured to receive the detection light (304),
a scanning unit (114) arranged between the excitation light source (102) and the objective lens (104) and configured to selectively direct the excitation light into different regions of the sample space (106) via the objective lens (104), and
a beam splitter (112) configured to direct the excitation light (300) from the excitation light source (102) to the objective lens (104) and to direct detection light (304) from the objective lens (104) to the detection unit (110),
wherein the detector array is time-gated with respect to the pulses of the excitation light (300).

2. The optical system according to claim 1, comprising a control unit (116) configured to receive a detection signal from the detector array.

3. The optical system according to claim 2, wherein the control unit (116) is configured to integrate the detection signal received from the detector array.

4. The optical system according to one of the preceding claims 2 and 3, wherein the control unit (116) comprises a system clock.

5. The optical system according to one of the preceding claims 2 to 4, wherein the control unit (116) comprises a gating unit configured to time-gate the detector signal with respect to the pulses of the excitation light (300).

6. The optical system according to one of the preceding claims, wherein the detection unit (110) comprises a gating unit configured to time-gate the detector array with respect to the pulses of the excitation light (300).

7. The optical system according to claim 6, wherein each detector element of the detector array of the detection unit (110) comprises a gating unit configured to time-gate the respective detector element with respect to the pulses of the excitation light (300).

8. The optical system according to one of the preceding claims, wherein the excitation light source (102) is configured to generate the pulses of excitation light (300) with a pulse width in a range between 5 ps to 100 ps.

9. The optical system according to one of the preceding claims, comprising a pinhole.

10. The optical system according to one of the preceding claims, wherein the detection unit (110) comprises at least one detection beam splitter configured to direct a first part of the detection light (304) onto the detector array and a second part of the detection light (304) onto a further detector array.

11. A microscope comprising the optical system (100) according to one of the preceding claims.

12. The microscope according to claim 11 configured to generate and/or integrate a time-gated detection signal of the detector array over a pixel dwell time.

13. A method for operating the microscope according to claim 11 or 12, comprising the steps of:
generating pulses of excitation light (300),
scanning a sample with the pulses of excitation light (300),
descanning detection light (304) onto a detector array, and
gating the detector array at least for a duration of the pulses of excitation light (300).

14. The method according to claim 12, wherein a time-gated detection signal of the detector array is integrated over a pixel dwell time.
